Europäisches Patentamt

European Patent Office

Office européen des brevets

(19)

(11) Publication number: **0 188 668**
A1

## EUROPEAN PATENT APPLICATION

(12)

(21) Application number: 85113347.0

(22) Date of filing: 21.10.85

(51) Int. Cl.⁴: **G 01 P 3/488**

(30) Priority: 22.01.85 JP 7688/85 U

(43) Date of publication of application: 30.07.86 Bulletin 86/31

(84) Designated Contracting States: DE FR GB

(71) Applicant: TOYOTA JIDOSHA KABUSHIKI KAISHA, 1, Toyota-cho Toyota-shi, Aichi-ken 471 (JP)

(72) Inventor: Ito, Norio, 8-29, Nishiyama, Nakane-cho, Toyota-shi Aichi-ken (JP)
Inventor: Ikushima, Kouichi, 56, Ekakushimachi 2-chome, Toyota-shi Aichi-ken (JP)
Inventor: Ohmori, Nobuo, 55-81, Kamiohbari, Hosokawa-cho, Okazaki-shi Aichi-ken (JP)
Inventor: Sakai, Kazunori, 1377-1, Hasuike, Hirabari Tenpaku-cho, Tenpaku-ku Nagoya-shi Aichi-ken (JP)
Inventor: Imahashi, Kunihiko, 7-14, Mitake 1-chome Togo-cho, Aichi-gun Aichi-ken (JP)

(74) Representative: Grams, Klaus Dieter, Dipl.-Ing. et al, Patentanwaltsbüro Tiedtke-Bühling-Kinne-Grupe-Pellmann-Grams-Struif Bavariaring 4, D-8000 München 2 (DE)

(54) Pulse gear for rotor sensor.

(57) Disclosed herein is a pulse gear (10) for a rotor sensor having an electromagnetic pickup (5, 6) mounted to a fixed member (4). The pulse sensor comprises a ring-like gear body mounted to a rotary member (2) so as to detect a rotational speed of the rotary member by the electromagnetic pickup, wherein the gear body is formed with a tooth surface in the vicinity of a sensing element of the electromagnetic pickup on an inner or outer periphery thereof, and a tip (12) of the tooth surface is formed with R surfaces (13) so that the tooth surface may be formed by plastic working. With this arrangement, the tooth surface to be detected may be formed by plastic working, and fluctuation in a tooth thickness may be blunted, thereby improving productivity and reducing cost. Further, it is possible to easily achieve reduction of weight, improvement in a sensing function and increase in a degree of freedom of assembling.

_– 1 –_

PULSE GEAR FOR ROTOR SENSOR

BACKGROUND OF THE INVENTION

(1)  Field of the Invention

This invention relates to a pulse gear for a rotor sensor (which is also called a speed sensor) mainly used for an electronic skid control system for a vehicle so as to detect a rotational speed of wheels.

(2)  Description of the Prior Art

This type of rotor sensor is mostly used for detecting a rotational speed of a vehicle front wheel. As is known, a sensing electromagnetic pickup is mounted to a steering knuckle (a fixed member, which corresponds to an axle carrier in case of a vehicle rear wheel), and a pulse gear is mounted to an axle hub (a rotary member). The pulse gear has a tooth surface on periphery of a ring-like gear body, and the electromagnetic pickup is mounted in the vicinity of the tooth surface. The electromagnetic pickup generates a pulse having a frequency equal to the number of teeth passing a position opposite to the pickup per unit time and detects a rotational speed of the wheel.

In the conventional pulse gear, the tooth surface is formed on an inner or outer periphery of the gear body by machining. (Typically, machining by gear cutter).

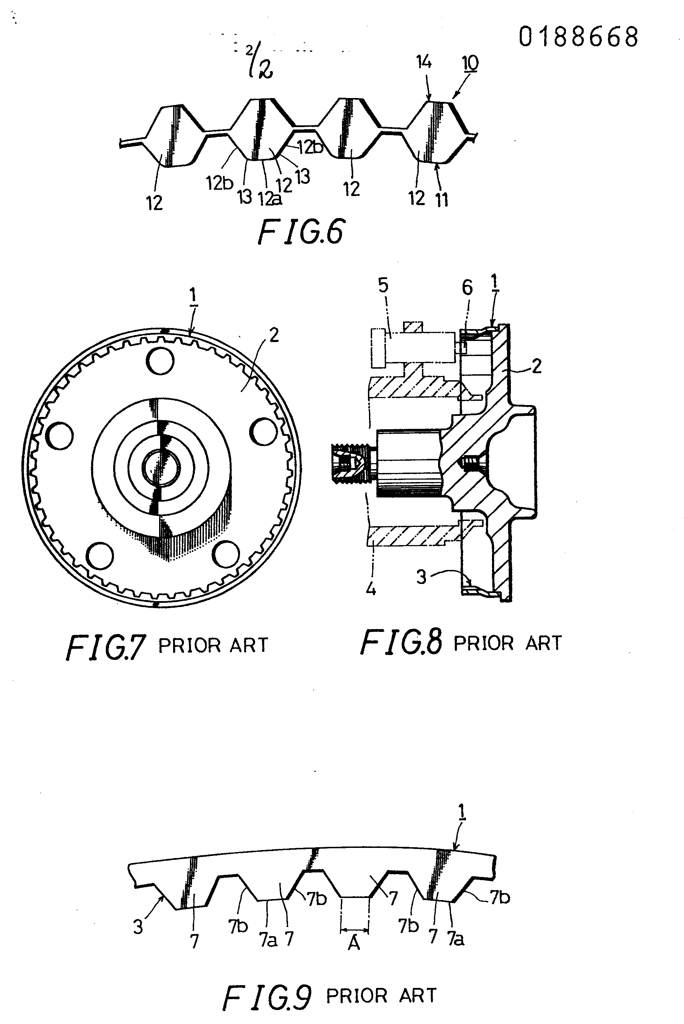

Referring to Figs. 7 to 9 which show an example of the conventional pulse gear, an end of a ring-like gear body 1 (a right-hand end in Fig. 8) is fixed to an outer periphery

— 2 —

of a front axle hub 2 (the rotary member). A tooth surface 3 to be detected by the electromagnetic pickup is formed on an inner periphery of the gear body 1. The electromagnetic pickup 5 is mounted to an end of a steering knuckle 4 (the fixed member), and a sensing element 6 of the electromagnetic pickup 5 is arranged in the vicinity of the tooth surface 3 of the gear body 1. The electromagnetic pickup 5 is designed to generate a pulse having a frequency equal to the number of teeth passing the opposite position to the pickup 5 per unit time and detect a rotational speed of the front axle hub 2.

The tooth surface 3 of the gear body 1 is formed by machining, and a top surface 7a of a tip 7 and slant surfaces 7b form sharp edges therebetween.

Accordingly, as the tooth surface 3 of the gear body 1 in the conventional pulse gear is formed by machining, there occur following various problems.

(1) Especially, in case of working of internal teeth where the tooth surface is formed on the inner periphery of the gear body 1, productivity is reduced and cost is increased.

(2) In proportion to the number of teeth of the tooth surface 3, the productivity is reduced and the cost is increased.

(3) It is required to frequently exchange the gear cutter so as to prevent change in a tooth profile due to wear of the gear cutter, resulting in reduction in productivity and increase in cost.

(4) It is also required to consider generation of

2

deformation of the gear body during machining, and accordingly it is limited to make the gear body 1 in a thin-walled structure, resulting that a weight of the gear body is hard to reduce.

(5) As it is difficult to accurately accord a center of a cutting surface of the gear body 1 with a center of cutting, there is generated fluctuation in a tooth thickness A (See Fig. 9) of the tip 7 on the tooth surface 3, resulting in reduction in a sensing function (accuracy of detection).

(6) When the gear body 1 is made of cast iron so as to improve working efficiency, it is rendered difficult to combine the gear body 1 with the axle hub 2 by welding. Accordingly, the gear body 1 is combined with the axle hub 2 unavoidably by bolts. As a result, a weight of an axle system is increased to have a bad influence upon comfortability and energy saving.

In summary, the conventional pulse gear has the problems of reduction in productivity and increase in cost. Further, it is not possible to achieve reduction in weight, improvement in the sensing function and increase in a degree of freedom of assembling.

SUMMARY OF THE INVENTION

It is an object of the present invention to provide a pulse gear having a tooth surface to be detected which may be formed by plastic working.

It is another object of the present invention to provide a pulse gear which may blunt fluctuation in a tooth thickness.

It is a further object of the present invention to provide a pulse gear which may be improved in productivity and reduced in cost.

It is a still further object of the present invention to provide a pulse gear which may easily achieve reduction of weight, improvement in a sensing function and increase in a degree of freedom of assembling.

According to the present invention, there is provided a pulse gear in a rotor sensor mainly including an electromagnetic pickup mounted to a fixed member. The pulse gear comprises a ring-like gear body mounted to a rotary member so as to detect a rotational speed of the rotary member by the electromagnetic pickup, wherein the gear body is formed with a tooth surface in the vicinity of a sensing element of the electromagnetic pickup on an inner or outer periphery thereof, and a tip of the tooth surface is formed with R surfaces so that the tooth surface may be formed by plastic working.

The invention will be more fully understood from the following detailed description and appended claims when taken with the drawings.

BRIEF DESCRIPTION OF THE DRAWINGS

Fig. 1 is an elevational view of a tooth profile of a pulse gear according to a first preferred embodiment;

Fig. 2 is an elevational view of a tooth profile of a pulse gear according to a second preferred embodiment;

Fig. 3 is an elevational view of a tooth profile of a pulse gear according to a third preferred embodiment;

Fig. 4 is an elevational view of a tooth profile of a pulse gear according to a fourth preferred embodiment;

Fig. 5 is an elevational view of a tooth profile of a pulse gear according to a fifth preferred embodiment;

Fig. 6 is an elevational view of a tooth profile of a pulse gear according to a sixth preferred embodiment;

Fig. 7 is an elevational view of an axle hub in the prior art;

Fig. 8 is a side view of the axle hub in Fig. 7, a part of which being broken away; and

Fig. 9 is an enlarged elevational view of a tooth profile of a pulse gear in the prior art.

DETAILED DESCRIPTION OF THE PREFERRED EMBODIMENTS

In the following, there will be described some preferred embodiments with reference to the drawing. As is similar to the afore-mentioned conventional pulse gear (See Fig. 8), a pulse gear in each of the following preferred embodiments is mounted to the front axle hub 2 (the rotary member), and it is adapted to be detected by the electromagnetic pickup 5 mounted to the steering knuckle (the fixed member). Therefore, explanation in this regard will be omitted.

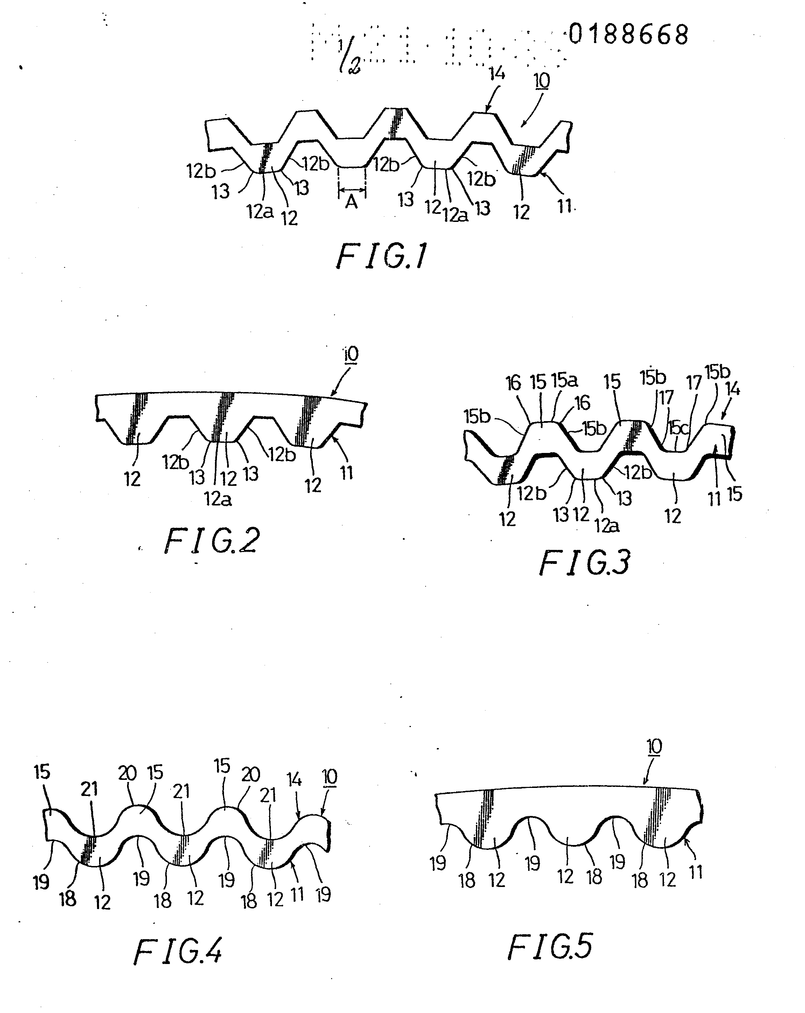

First Preferred Embodiment (See Fig. 1)

A pulse gear in this embodiment is formed with a substantially trapezoidal tooth surface 11 to be detected on an inner peripheral surface of a ring-like gear body 10 made of low carbon steel material or stainless steel material (e.g., SUS 400). An end surface 12a of a tip 12 in the tooth surface 11 is gently continuous through R surfaces 13 to slant surfaces 12b. Further, a trapezoidal tooth surface 14 is formed on an outer peripheral surface of the gear body 10 in the substantially same phase as of the tooth surface 11.

The tooth surface 11 to be detected is formed by plastic working of the gear body 10, and at the same time, the tooth surface 14 is also formed. The plastic working is conducted by application of a known art. For example, the gear body before working is rotated between an inside roller having a tooth surface corresponding to the tooth surface 11 and an outside roller having a tooth surface corresponding to the tooth surface 14, thereby to plastically work the inner and outer peripheries of the gear body.

According to the above-mentioned pulse gear, as the tip 12 on the tooth surface 11 of the gear body 10 is formed with the R surfaces 13, the tooth surface 11 may be formed by plastic working, and fluctuation in a tooth thickness A of the tip 12 may be blunted.

Accordingly, the above-mentioned pulse gear exhibits the following various effects in comparison with the conventional pulse gear as machined.

(1) Especially, even in case of working of internal teeth where the tooth surface 11 is formed on the inner periphery of the gear body 10, such working may be relatively easily

6

performed thereby to improve productivity and accordingly reduce cost.

(2)    The productivity is not almost varied irrespective of the number of teeth on the tooth surface 11. Therefore, even if the number of teeth on the tooth surface 11 is increased, the productivity is not almost reduced, and there is no influence upon increase in cost.

(3)    Differring from machining, there is created no change in a tooth profile due to wear of the gear cutter, and frequent exchange of the gear cutter is not required, thereby improving the productivity and rendering cost reduction effective.

(4) As there is not created undue deformation of the gear body 10 by plastic working, the gear body 10 may be made in a thin-walled structure, thereby easily effecting reduction in weight of the gear body 10.

(5)    As there are formed the R surfaces 13 at the tip 12 on the tooth surface 11 of the gear body 10, fluctuation in the tooth thickness A of the tip 12 may be blunted, and accordingly the sensing function may be expectedly improved.

(6)    As the gear body 10 is made of low carbon steel material or stainless steel material (e.g., SUS 400), connection of same with the axle hub 2 may be carried out by press-fitting, caulking, welding and brazing in addition to bolting, and accordingly a degree of freedom of assembling may be increased.

(7)    As the gear body 10 is plastically worked by completely contacting same with a mold, accuracy of the tooth thickness A of the tip 12 on the tooth surface 11 may be increased thereby to effectively improve the sensing function.

In summary, according to the pulse gear in this embodiment, the productivity may be improved, and the cost may be reduced. Furthermore, it is possible to easily achieve reduction of weight, improvement in the sensing function and increase in the degree of freedom of assembling.

Second Preferred Embodiment (See Fig. 2)

The pulse gear in this embodiment includes a smooth outer peripheral surface of the gear body 10 by eliminating the tooth surface 14 on the outer peripheral surface of the gear body 10 in the first preferred embodiment. The other constitution and operation of the pulse gear are almost the same as those in the first preferred embodiment, and therefore explanation therefor will be omitted.

Third Preferred Embodiment (See Fig. 3)

According to the pulse gear in this embodiment, a top surface 15a of a tip 15 at the tooth surface 14 on the outer peripheral surface of the gear body 10 is gently continuous through R surfaces 16 to slant surfaces 15b, while a bottom surface 15c of the tip 15 is also gently continuous through R surfaces 17 to the slant surfaces 15b. The other constitution and operation of the pulse gear is almost the same as those in the first preferred embodiment, and therefore explanation therefor will be omitted. Further, in this embodiment, the tooth surface 14 may be set to a tooth surface to be detected.

Fourth Preferred Embodiment (See Fig. 4)

According to the pulse gear in this embodiment, both the tooth surfaces 11 and 14 of the gear body 10 in the first preferred embodiment have a waveform profile, and a top portion of the tip 12 on the tooth surface 11 is gently continuous through R surfaces 18 and 19 to a bottom portion of the tip 12. In the same manner, a top portion of the tip 15 on the tooth surface 14 is gently continuous through R surfaces 20 and 21 to a bottom portion of the tip 15. The other constitution and operation are almost the same as those in the first preferred embodiment, and therefore explanation therefor will be omitted.

Fifth Preferred Embodiment (See Fig. 5)

The pulse gear in this embodiment includes a smooth outer peripheral surface of the gear body 10 by eliminating the tooth surface 14 on the outer peripheral surface of the gear body 10 in the fourth preferred embodiment. The other constitution and operation are almost the same as those in the first preferred embodiment, and therefore explanation therefor will be omitted.

Sixth Preferred Embodiment (See Fig. 6)

According to the pulse gear in this embodiment, both the tooth surface 11 and 14 of the gear body 10 in the first preferred embodiment are displaced from each other by half a pitch. The other constitution and operation are almost the same as those in the first preferred embodiment, and therefore explanation therefor will be omitted. This arrangement of the sixth embodiment is applicable to the third and fourth embodiments. The displacement between the tooth surfaces 11 and 14 is not limited to half a pitch, but may be suitably set to one-third or one-fourth of a pitch, for example.

Having thus described the preferred embodiments of the invention, it should be understood that numerous structural modifications and adaptations may be restored to without departing from the spirit of the invention.

WHAT IS CLAIMED IS:

1. In a rotor sensor mainly including an electromagnetic pickup mounted to a fixed member, a pulse gear comprising a ring-like gear body mounted to a rotary member so as to detect a rotational speed of said rotary member by said electromagnetic pickup, wherein said gear body is formed with a tooth surface in the vicinity of a sensing element of said electromagnetic pickup on an inner or outer periphery thereof, and a tip of said tooth surface is formed with R surfaces so that said tooth surface may be formed by plastic working.

2. The pulse gear as defined in claim 1, where said gear body is formed with a substantially trapezoidal tooth surface to be detected on the inner periphery thereof, and is formed with a trapezoidal tooth surface on the outer periphery thereof in the substantially same pitch as of the tooth surface to be detected.

3. The pulse gear as defined in claim 1, wherein said gear body is formed with a smooth outer peripheral surface, and is formed with a substantially trapezoidal tooth surface on the inner periphery thereof.

4. The pulse gear as defined in claim 1, wherein said tooth surface on the outer periphery of said gear body includes a top surface of the tip on said tooth surface gently continuously extending through outer R surfaces to slant surfaces of the tip, and a bottom surface of the tip

11

gently continuously extending through inner R surfaces to the slant surfaces.

5. The pulse gear as defined in claim 1, wherein said tooth surfaces on the inner and outer peripheries of said gear body have a waveform profile.

6. The pulse gear as defined in claim 1, wherein said gear body is formed with a smooth outer peripheral surface, and is formed with a tooth surface of waveform profile on the inner periphery thereof.

7. The pulse gear as defined in claim 1, wherein said tooth surfaces on the outer and inner peripheries of said gear body are displaced from each other by half a pitch.

0188668

FIG.1

FIG.2

FIG.3

FIG.4

FIG.5

0188668

FIG.6

FIG.7 PRIOR ART

FIG.8 PRIOR ART

FIG.9 PRIOR ART

**European Patent Office**

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 801 845 (W.A. GAVITT, Sr.) * Column 1, lines 48-52; column 2, lines 8-13, 29-33; column 3, lines 34-37; column 4, lines 19-25; figures 1-3 * | 1,4,5 | G 01 P 3/488 |
| A | | 2 | |
| X | US-A-3 961 215 (T.A. GEE et al.) * Column 4, lines 21-33; figures 2,4,5 * | 1,4,5 | |
| X | DE-A-2 431 962 (TEVES GmbH) * Page 5, lines 3-29; figure 1 * | 1,4 | |
| A | US-A-4 171 495 (McNINCH, Jr.) * Column 2, lines 30-34; column 3, lines 47-55; column 3, line 67 - column 4, line 2; figures 1,2,5 * | 1,2 | **TECHNICAL FIELDS SEARCHED (Int. Cl.4)** G 01 P |

The present search report has been drawn up for all claims

| Place of search | Date of completion of the search | Examiner |
|---|---|---|
| THE HAGUE | 03-04-1986 | HANSEN P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82